# EUROPEAN PATENT APPLICATION

(11) **EP 1 674 157 A1**
(43) Date of publication of application: **28.06.2006**
(21) Application number: 04078484.5
(22) Date of filing: 22.12.2004
(51) Int. Cl.: B01J 29/88, B01J 37/30, B01D 53/86

(54) **Decomplexing metallic cations from metallo-organic compounds**

(71) Applicant: Technische Universiteit Delft, 2628 BL Delft (NL)
(72) Inventor: Melian Cabrera, Ignacio V., 23617 PL Leiden (NL); Kapteijn, Frederik, 1447 TK Purmerend (NL); Moulijn, Jacob A., 2517 HB Den Haag (NL)
(74) Representative: Winckels, Johannes Hubertus F.

(57) **Abstract**

The invention is directed to a process for liberating metallic cations from metallo-organic compounds, said process comprising contacting an aqueous solution of the metallo-organic compound with an oxidising agent, thereby oxidising the organic component and obtaining the free cation.

## Description

The invention relates to a process for liberating or decomplexing free metal cations from metallo-organic compounds or complexes.

Many commercially important reactions utilize a solid catalyst to achieve high conversion levels. This also applies to reactions with environmental applications, like removal of liquid-gas wastes from stationary facilities.

The catalysts are mainly prepared by using inorganic salts in aqueous media. There are numerous known methods for that, such as coprecipitation, ion-exchange, deposition and impregnation. Ion-exchange is particularly interesting for post-synthesis modification of molecular sieves (zeolites), resins and other exchangeable supports like alumina and silica. Most of these methods use aqueous solutions of readily soluble metal salts. As the nitrates, sulphates and chlorides are among the best soluble metal salts, often nitrates or sulphates are used. Chlorides are less often used in view of the corrosive nature of chlorides.

Ion-exchange is performed by contacting a solid support with an aqueous solution of the inorganic salts. The phenomena that take place are rather complex and far from understood by simple models. However, experimental variables like solid to liquid ratio, concentration of the salt, temperature, pH, ionic strength, can be tuned to achieve the targeted exchange level.

A distinct disadvantage of the use of these types of metal salt solutions resides in the problem of waste water generated during the manufacture of the catalyst, be it through some precipitation method or an ion-exchange method.

An example of such a method is disclosed in WO 99/34901, wherein the production of catalysts for N₂O decomposition via ferric nitrate is described. Nitrates in waste water lead to eutrophication (massive growing of algae) in the emitted water. Denitrification is expensive since facultative heterotrophic bacteria are conventionally used for that. Sulphates are also employed. They also present similar problems as nitrates.

A further aspect of the use of inorganic salts (as in WO 99/34901) resides therein that when the metal are applied, the catalysts have to be calcined leading to possible damage of the catalyst structure (cracks and other structural defects, loss of crystallinity, etc.).

Alternatively, the use of organometallic precursors of the metal which yield CO₂ (instead of NOx) and water will minimise the waste generated. However, metal-ligand complexes, especially organic ligands, are very stable molecular entities which "protect" the metal cation. When using organometallic salts of the metal, complexation is an inherent phenomenon since the own salt forms the complex once dissolved in water. Accordingly, these precursors cannot be used as such, as the metal-ion is not 'free' in the sense that it easily precipitates or can be exchanged with other metal ions in a lattice.

Preliminary studies using ferric citrate, acetate and oxalate revealed that the performance of these catalysts in N₂O decomposition reaction was inferior to the conventionally exchanged Fe nitrate case (based on WO 99/34901). Complexation of the Fe(III) cations hinders the exchange process on the zeolite. The complexation of citrates to Fe(III) is very strong, log_{KML/ML}= 11.5, against 3.05 for Fe(II)-oxalate. Additionally, citrate groups are bigger than for instance oxalate ones, which make its use for ion-exchange more difficult as they can block the entrance of the zeolite channels. Apart from organic ligands (like acetate, formate, citrate, etc.) complexing ligands from microbial sources show a powerful chelating ability, specially with Fe(III). These chelators, termed siderophores, stabilize ferric iron and prevent its precipitation. These molecules are the products of biosynthesis and supply iron to cells. Thermodynamic formation constants for Fe(III)-siderophore complexes are generally higher than 10³⁰. Their complexing properties is attributed to chelation by proximate acidic functional groups. Most siderophores have structures with functional groups which include catechols, hydroxamic acids, α-hydroxy acids, carboxylic acids, 2-hydroxy phenyl oxazoline.

It is an object of the present invention to provide a method of liberating metal cations from metallo-organic compounds or complexes, by which method the metal ions become available in the aqueous solution for further reaction.

The invention is based on the surprising discovery that by using (mild) oxidising conditions in the aqueous solution, the metal is decomplexed from the compound. After the metal-ion has undergone the subsequent ion-exchange, deposition or precipitation, the remaining solution mainly contain some organic compounds that can easily be recycled or disposed of without serious environmental problems.

A further object resides in the easy and environmentally friendly production of zeolite based catalyst, more in particular Fe-ferrierite.

In a first embodiment the invention is directed to a process for liberating metallic cations from metallo-organic compounds, which process comprisies contacting an aqueous solution of the metallo-organic compound with an oxidising agent, thereby oxidising the organic component and obtaining the free cation.

The elimination of the organic ligands is done with an oxidising agent (like H₂O₂) at certain conditions of temperature, concentration and time, which is able to oxidise the ligands into CO₂ and H₂O. The remaining metal cation containing solution can be used for any application. An important application is the exchange of the metal cation into a solid (zeolite) to form a valuable catalyst with practical possibilities.

In a second embodiment the invention concerns a process for the exchange of polyvalent metal ions into a zeolite framework lattice, in which process a zeolite framework is contacted with an aqueous solution of a metallo-organic compound and an oxidising agent, preferably H₂O₂, and oxidising the metallo-organic compound, preferably using a catalyst for the oxidation, thereby generating free cations of the metal, which cations exchange with cations in the lattice.

A third embodiment is the production of a useful catalyst for the decomposition of nitrous oxides, namely an Fe-ferrierite catalyst, in which process a ferrierite framework is contacted with an aqueous solution of a Fe-organic compound, preferably Fe-citrate, and an oxidising agent, preferably H₂O₂, and oxidising the Fe-organic compound, thereby generating free Fe-cations, which cations exchange with cations in the ferrierite lattice.

Finally the invention also concerns the use of the catalyst produced by this process for the decomposition of nitrous oxides, such as N₂O.

The concept presented here is to break down complexation equilibria by oxidising the compounds (chelates) with oxidising compounds, such as H₂O₂ solutions. Other suitable oxidisers are ozone, nitroxyl compounds, such as TEMPO, peracids such as peracetic acid and the like.

The oxidising action can be enhanced by the use of catalysts therefore. Suitable catalysts are ferric and ferrous salts (eg. ferric nitrate, mohr's salt, etc.), copper(II) salts and in general those metal-cation pairs M^{m+}/M^{(m-1)+} which presents a suitable oxidation potential to split-up H₂O₂ in OH radicals (eg. Al, Si, Pb, Hg and Zn salts) Application of light (photo-assisted process) like UV-Vis also improves the catalytic reaction. In certain embodiments it is possible that the metal itself acts as catalyst, such as in the case of iron. It is also possible that the material and or the solution may contain trace amounts of the abovementioned compounds that act as catalyst.

The process as described in its most broad application is applicable to producing an aqueous solution containing at least one (polyvalent) metal ion, which metal-ion can be applied onto or into a solid material. For this the various well-known methods may be used, such as deposition, precipitation, deposition precipitation, ion-exchange and the like.

As indicated above, one embodiment of the invention uses ion-exchange, more in particular to modify the properties of molecular sieves (zeolites). Suitable molecular sieves are ZSM-5, and other MFI-type structures, ferrierite (FER), beta (BEA), mordenite (MOR), USY and Y zeolites, mesoporous materials like MCM-41 and SBA-15, and polymeric resins. The metal-ions to be exchanged into the zeolite framework lattice can be any suitable metal that forms water-soluble organic compounds or complexes. Examples are transition metal-ions such as Iron (II) and Iron (III), Copper(II), Copper(I), Cobalt(II) and Cobalt (III), Manganese(II), Manganese(III), Platinum(IV), Platinum(II), Ruthenium(III).

In the process of the invention a solution containing the metal compound is contacted with the solid support, which has to be provided with the metal. The method considers the pore volume of the solid support (in our case the zeolite). The amount of solution added is preferably just enough to fill the pore volume of the material. For practical purposes, it uses the pore volume of the zeolite with an excess of solution between 20-50%. The excess of solution is necessary to allow the stirring of the material during the exchange, and make its handling easier and transportation by extrusion. The appearance of the material is a sticky slurry but having enough flowing characteristics to handle it. The ligand to be used in the process of the invention is selected from the group of ligands described above, namely the organic ligands and the ligands from a microbial source.

An important application of the basic idea of the present invention is in the production of Fe-FER catalyst for the decomposition of nitrous oxides, such as N₂O. The invention is now elucidated in more detail using this specific example, but it is to be understood, that this is merely one embodiment and that the specific steps apply more generally also to other molecular sieves and metal-ions.

The removal of ligands liberates Fe³⁺ cations and/or partially charged Fe(III) hydroxocomplexes. The exchange is expected to be improved, and the calcination can also be avoided. Fenton-like oxidation involving hydroxyl radicals occurs as well. Ferric salts in presence of H₂O₂ generate OH° radicals which are strongly oxidizing agents. The rate of radical generation depends on the initial concentration of ferric ions, which depends indeed on the complexation equilibrium. According to thermodynamic predictions of ferric-citrate solutions, the presence of free Fe³⁺ is not negligible at pH between 0-5. Therefore, both direct H₂O₂ and hydroxyl radicals are involved during titration.

### EXAMPLE

For the preparation of a Fe-FER catalyst, NH₄-FER was exchanged with Fe³⁺ ions. To achieve this the solution described below was added in an amount of 1 g to 10 g of the NH₄-FER.

The solution added contained Fe-citrate dissolved in water (20 mg/ml), and the required amount of H₂O₂ (molar ratio H₂O₂/citrate = 40) to oxidise the citrates. After homogenisation of the slurry the system was heated up to the desired temperature (60-100°C) to initiate the oxidation reaction (removal). Drop-wise addition of the H₂O₂ solution can also be carried out, resulting in similar results as for one-time addition.

Based on our results, citrate was successfully removed and Fe³⁺ was exchanged into the zeolite. Surprisingly, no hydrolysis leading to the undesired iron hydroxide was detected since the exchange was very fast. The resulting catalyst has similar properties as that obtained via ferric nitrate in excess of water (WO 99/34901 catalysts). The catalyst of this example had the following composition 0.45 *wt.%* Fe, 7.05 wt.% Al (as Al₂O₃), 70.65 *wt.%* Si (as SiO₂), and Na/K less than 0.007 *wt.* % as oxides.

Nonetheless, the catalyst prepared is greener in terms of less waste generated. The catalyst can be used for mitigation of N₂O, which is a strong green house gas mainly emitted by the nitric acid industry.

## Claims

1. Process for liberating metallic cations from metallo-organic compounds, said process comprising contacting an aqueous solution of the metallo-organic compound with an oxidising agent, thereby oxidising the organic component and obtaining the free cation.

2. Process according to claim 1, wherein the oxidising agent is H₂O₂.

3. Process according to claim 1 or 2, wherein the oxidation occurs in the presence of a catalyst.

4. Process according to claim 3, wherein the catalyst is a transition metal ion, preferably iron.

5. Process according to claim 1-4, wherein the liberated metallic cation is subsequently precipitated onto a substrate or exchanged into a lattice.

6. Process for the exchange of polyvalent metal ions into a zeolite framework lattice, in which process a zeolite framework is contacted with an aqueous solution of a metallo-organic compound and an oxidising agent, preferably H₂O₂, and oxidising the metallo-organic compound, preferably using a catalyst for the oxidation, thereby generating free cations of the metal, which cations exchange with cations in the lattice.

7. Process according to claim 6, wherein the zeolite is selected from the group of MFI (ZSM-5), ferrierite, mordenite, USY, Y-zoelites, MCM-41, SBA-15 and BEA, preferably ferrierite.

8. Process according to claim 1-7. wherein the metal ion is selected from the transition metals family, preferably Group VIII.

9. Process according to claim 1-8, wherein the organic moiety of the metallo-organic compound is a carboxylic acid, catechols, hydroxamic acids, α-hydroxy acids and 2-hydroxy phenyl oxazoline.

10. Process for the preparation of an Fe-ferrierite catalyst, in which process a ferrierite framework is contacted with an aqueous solution of a Fe-organic compound, preferably Fe-citrate, and an oxidising agent, preferably H₂O₂, and oxidising the Fe-organic compound, thereby generating free Fe-cations, which cations exchange with cations in the ferrierite lattice.

11. Process for decomposing nitrous oxides using a Fe-ferrierite catalyst, **characterized in that** a catalyst is used which is prepared using the process of claim 10.
